# EUROPÄISCHE PATENTSCHRIFT

(11) **EP 2 393 341 B1**
(45) Veröffentlichungstag und Bekanntmachung des Hinweises auf die Patenterteilung: **26.09.2012**
(21) Anmeldenummer: 10164644.6
(22) Anmeldetag: 01.06.2010
(51) Int. Cl.: H05B 7/06, F27B 3/28, F27D 21/00

(54) **Verfahren und Vorrichtung zur Längenmessung an einer Elektrode**
Method and device for measuring the length of an electrode
Procédé et dispositif de mesure de longueurs sur une électrode

(43) Veröffentlichungstag der Anmeldung: 07.12.2011
(73) Patentinhaber: Dango & Dienenthal Maschinenbau GmbH, 57072 Siegen (DE)
(72) Erfinder: Dienenthal, Jörg, 57234 Wilnsdorf (DE); Morgenstern, Hans-Uwe, 57258 Freudenberg (DE)
(74) Vertreter: advotec.

(56) Entgegenhaltungen:
- WO-A1-01/88472
- DE-A1-102004 022 579
- DE-B- 1 070 303
- DE-B- 1 106 007
- US-B1- 7 386 369

## Beschreibung

Die vorliegende Erfindung betrifft ein Verfahren zur Messung der Länge einer Elektrode bzw. Bestimmung der Position eines Verbrauchsquerschnitts der Elektrode in einem Elektroofen, bei dem die Messung mittels Radar erfolgt, derart, dass eine Radar-Sende-/Empfangseinrichtung mittels einer Wellenleiteranschlusseinrichtung an einen an der Elektrode angeordneten, sich in Abnutzungsrichtung der Elektrode von einem Endquerschnitt zu einem Verbrauchsquerschnitt der Elektrode erstreckenden Wellenleiter, der als Wellenleiterrohr oder Wellenleiterkanal ausgebildet ist, angeschlossen ist, und die Zeitdifferenz gemessen wird zwischen Aussendung des Radarsignals und Empfang des von einer Diskontinuitätsstelle des Wellenleiters im Verbrauchsquerschnitt der Elektrode durch Reflektion erzeugten Echos. Des Weiteren betrifft die Erfindung eine Vorrichtung zur Durchführung des Verfahrens.

In so genannten "Elektroöfen" wird in einem Ofengefäß Metall mittels der durch Ausbildung eines Lichtbogens zwischen einer Elektrode und dem Metall bzw. der Schmelze frei werdenden thermischen Energie eingeschmolzen. Bei diesem Verfahren verbrauchen sich die Elektroden kontinuierlich, so dass zur Einstellung eines gewünschten Abstandes zwischen dem durch einen Verbrauchsquerschnitt definierten Ende der Elektrode und dem einzuschmelzenden Metall bzw. der Schmelze die Elektrode entgegen der Abnutzungsrichtung nachgeführt werden muss.

Um möglichst konstante Bedingungen während des gesamten Einschmelzvorgangs erreichen zu können, kommt es darauf an, diesen Abstand möglichst konstant bzw. definiert zu halten, so dass eine Nachführung der Elektrode nach Möglichkeit in Übereinstimmung mit dem Elektrodenverbrauch erfolgen sollte. Hierzu ist es notwendig, die Länge der Elektrode bzw. die Relativlage des Verbrauchsquerschnitts gegenüber der Schmelzenoberfläche zu ermitteln. Dies gilt grundsätzlich unabhängig davon, ob in Abhängigkeit von dem jeweiligen Einschmelzverfahren der Verbrauchsquerschnitt oberhalb des Schmelzbades angeordnet ist oder in das Schmelzbad eingetaucht ist.

Zur Ermittlung der Elektrodenlänge bzw. des Abstandes des Verbrauchsquerschnitts der Elektrode von der Schmelzenoberfläche sind bereits verschiedene Verfahren bekannt. So ist es beispielsweise aus der US 4,843,234 bekannt, die Länge der Elektrode mittels einer an bzw. in der Elektrode angeordneten Lichtleiteranordnung durch Bestimmung der Elektrodenlänge als Längendifferenz zu berechnen. Zur Erzielung einer hinreichenden Genauigkeit wird in der US 4,843,234 empfohlen, zwei von einander getrennte Lichtleiteranordnungen einzusetzen, die einen entsprechend komplexen Gesamtaufbau der Messeinrichtung erforderlich machen. Zu dem sind bei dem bekannten Verfahren besondere Maßnahmen erforderlich, um den Lichtleiter vor den extremen Temperaturen im Elektroofen zu schützen.

Die EP 1 181 841 B1 zeigt ein Verfahren, bei dem der Abstand zwischen einer Elektrodenspitze und der Schmelzenoberfläche mittels einer Referenzlängenmessung an einem Elektrodenhubsystem durchgeführt wird. Abgesehen davon, dass die Bestimmung Lage der Elektrodenspitze bzw. des Verbrauchsquerschnitts der Elektrode über der Schmelzenoberfläche unabhängig von der Länge der Elektrode erfolgt, ist zur Berechnung des Abstandes eine nachfolgende Differenzwertberechnung unter Berücksichtigung eines Korrekturwertes erforderlich, der sich aus dem Elektrodenverbrauch zwischen zwei Messungen ergibt. Somit ermöglicht das aus der EP 1 181 841 B1 bekannte Verfahren weder die Messung der Länge der Elektrode noch ist die Bestimmung des Abstandes der Elektrodenspitze von der Schmelzenoberfläche in situ möglich.

Aus der DE 10 2004 022 579 A1 ist ein Verfahren sowie eine Vorrichtung bekannt, die eine Bestimmung der Elektrodenlänge ermöglichen. Im einzelnen wird vorgeschlagen bei Durchführung des Verfahrens entweder einen optischem Wellenleiter zu verwenden und die Elektrodenlänge durch Messung der Laufzeit des Reflexes in Form einer Phasenverschiebung der modulierten Schwingung zu messen, oder bei Verwendung stabförmiger dielektrischer Wellenleiter aus Keramik zur Bestimmung der Elektrodenlänge die Messung der Laufzeit des Reflexes von Mikrowellen von der Bruchstelle bis zum oberen Ende des Wellenleiters gemessen.

Aus der DE 10 70 303 B ist eine Lichtbogenschmelzofenanlage bekannt, bei der eine Messung der Lichtbogenlänge erfolgt.

Die DE 11 06 007 B zeigt ein Verfahren zur Messung der Elektrodenlänge, bei dem die Elektrode selbst als Wellenleiter zur Übertragung mechanischer Wellen genutzt wird.

Der vorliegenden Erfindung liegt somit die Aufgabe zugrunde, ein Verfahren bzw. eine Vorrichtung vorzuschlagen, das bzw. die eine In situ-Messung der Elektrodenlänge bzw. die Bestimmung der Position des Verbrauchsquerschnitts der Elektrode mit einem möglichst geringen Aufwand ermöglicht.

Diese Aufgabe wird durch ein Verfahren mit den Merkmalen des Anspruchs 1 bzw. einer Vorrichtung mit den Merkmalen des Anspruchs 5 gelöst.

Bei dem erfindungsgemäßen Verfahren erfolgt die Messung mittels Radar, derart, dass eine Radar-Sende-/Empfangs-einrichtung mittels einer Wellenleiteranschlusseinrichtung an einen an der Elektrode angeordneten, sich in Abnutzungsrichtung der Elektrode von einem Endquerschnitt der Elektrode zu einem Verbrauchsquerschnitt der Elektrode erstreckenden Wellenleiter, der als Wellenleiterrohr oder Wellenleiterkanal ausgebildet ist, angeschlossen ist, und die Zeitdifferenz gemessen wird zwischen Aussendung des Radarsignals und Empfang des von einer Diskontinuitätsstelle des Wellenleiters im Verbrauchsquerschnitt der Elektrode durch Reflektion erzeugten Echos.

Das erfindungsgemäße Verfahren ermöglicht eine permanente Messung während des laufenden Betriebs des Elektroofens mittels des an der Elektrode angeordneten Wellenleiters. Da sich aufgrund des Elektrodenabbrands das Ende des Wellenleiters kontinuierlich im Verbrauchsquerschnitt oder im Falle eines außerhalb der Elektrodenmasse verlaufenden Wellenleiters auf Höhe des Verbrauchsquerschnitts befindet, ist sichergestellt, dass das Ende des Wellenleiters als zutreffender Referenzwert für die Position des Verbrauchsquerschnitts genommen werden kann und somit auch bei bekannter Position des oberen Endes der Elektrode die aktuelle Länge der Elektrode bestimmbar ist.

Als Wellenleiter wird dabei ein längs der Elektrode verlaufendes Wellenleiterrohr oder auch ein innerhalb der Elektrode verlaufendes Wellenleiterrohr verwendet werden. Soweit eine Ausbildung bzw. Anordnung eines Wellenleiters innerhalb der Elektrode vorgesehen ist, kann der Wellenleiter auch durch einen innerhalb der Elektrode in der Elektrodenmaterial selbst ausgebildeten Kanal gebildet sein, der eine zur Fortpflanzung von Radarwellen geeignet Kanalwandung aufweist. Das im oder auf Höhe des Verbrauchsquerschnitt angeordnete Ende des Wellenleiters bildet eine Diskontinuitätsstelle oder Inhomogenitätsstelle, die ein entsprechendes Echo der als Radarwellen genutzten elektromagnetischen Wellen erzeugt, das im Empfangsteil der Radar-Sende-/Empfangseinrichtung detektiert wird.

Bei einer besonders bevorzugten Variante des Verfahrens wird zur Anpassung des räumlichen Abstandes zwischen einer unabhängig von der Elektrode positionierten Radar-Sende-/Empfangseinrichtung und dem Endquerschnitt der Elektrode die Länge der Wellenleiteranschlusseinrichtung verändert. Anders als in dem Fall, wenn die Radar-Sende-/Empfangseinrichtung sich in unmittelbarer Nähe des Endquerschnitts befindet und somit die Wellenleiteranschlusseinrichtung als hinsichtlich seiner Längserstreckung unveränderbarer Anschluss ausgebildet sein kann, ermöglicht eine in der Länge veränderbare Ausgestaltung der Wellenleiteranschlusseinrichtung eine beliebige Relativpositionierung der Radar-Sende-/Empfangseinrichtung gegenüber dem Endquerschnitt der Elektrode. Somit ist es auch möglich, die Radar-Sende-/Empfangseinrichtung außerhalb des Ofenraums in einer, insbesondere hinsichtlich der thermischen Belastung geschützten Position anzuordnen und die Wellenleiteranschlusseinrichtung zur Überbrückung des Abstandes zwischen der beispielsweise gegenüber einer Ofenwandung fest definierten Position der Radar-Sende-/Empfangseinrichtung und dem Endquerschnitt der Elektrode zu verwenden. Dabei ist es besonders vorteilhaft, wenn die Wellenleiteranschlusseinrichtung aus einem in der Dimensionierung und hinsichtlich des Materials mit dem Wellenleiter übereinstimmenden Rohr gebildet ist.

Insbesondere in dem Fall, wenn zum Einschmelzen des Materials im Elektroofen eine Söderbergelektrode verwendet wird, die einen segmentierten Aufbau aufweist, ist es vorteilhaft, wenn die wirksame Länge des Wellenleiters entsprechend einem auf dem Endquerschnitt erfolgenden Aufbau der Elektrode mit Elektrodenteilstücken zum Ersatz von im Verbrauchsquerschnitt verbrauchter Elektrodenmasse verändert wird.

Unabhängig davon, ob die Fortpflanzung der Radarwellen in einem in der Elektrodenmasse angeordneten Wellenleiter oder in einem Wellenleiterkanal erfolgt, dessen Kanalwandung durch die Elektrodenmasse gebildet ist, erweist es sich als vorteilhaft, wenn der Wellenleiter während des Betriebs des Elektroofens mit einem Spülmedium beaufschlagt wird, um zu verhindern, dass Material in den Wellenleiter eindringt, das unerwünschte Diskontinuitätsstellen innerhalb des Wellenleiters ausbilden könnte. Als besonders vorteilhaft zur Ausbildung einer zum Verbrauchsquerschnitt hin gerichteten Strömung im Wellenleiter erweist es sich, wenn der Wellenleiter mit einem Spülgas beaufschlagt wird.

Die erfindungsgemäße Vorrichtung weist eine Radar-Sende-/Empfangseinrichtung, ein an der Elektrode angeordnetes Wellenleiterrohr sowie eine Wellenleiteranschlusseinrichtung zur Verbindung des Wellenleiterrohrs mit der Radar-Sende-/Empfangseinrichtung auf, wobei sich das Wellenleiterrohr von einem Endquerschnitt der Elektrode in Abnutzungsrichtung der Elektrode bis zu einem Verbrauchsquerschnitt der Elektrode erstreckt.

Bei einer bevorzugten Ausführungsform weist die Wellenleiteranschlusseinrichtung zur Herstellung einer Wellenleiterverbindung zwischen einer unabhängig von der Elektrode positionierten Radar-Sende-/Empfangseinrichtung und dem Endquerschnitt der Elektrode eine veränderbare Länge auf.

Insbesondere für den Einsatz der Vorrichtung an einer Söderberg-Elektrode ist es vorteilhaft, wenn zwischen der Wellenleiteranschlusseinrichtung und dem Wellenleiterrohr eine Wellenleiterverbindung ausgebildet ist, in der ein oberes axiales Ende des Wellenleiterrohrs axial verschiebbar gegenüber dem unteren axialen Ende der Wellenleiteranschlusseinrichtung aufgenommen ist, um Anpassungen an die sich als Folge des Elektrodenaufbaus ändernde Position des oberen axialen Endes der Elektrode durchführen zu können.

Besonders vorteilhaft ist es, wenn zur Ausbildung der axialen Verschiebbarkeit die Wellenleiterverbindung als Schiebemuffe ausgebildet ist, derart, dass ein Ende der Wellenleiteranschlusseinrichtung und ein Ende des Wellenleiterrohrs ineinandergreifend angeordnet sind. Hierdurch ist es möglich, eine Längenveränderbarkeit zu erzielen, die die Fortpflanzungscharakteristik der Radarwellen zwischen dem Verbrauchsquerschnitt der Elektrode und der Radar-Sende-/Empfangseinrichtung möglichst wenig beeinflusst.

Um unabhängig von Unstetigkeiten im Gefüge der Elektrodenmasse für eine einheitlich ausgebildete Fortpflanzung der Radarwellen im Wellenleiter zu sorgen, bzw. reproduzierbare Bedingungen für die Übertragung der elektromagnetischen Wellen in der Elektrode zu schaffen, ist es vorteilhaft, wenn das Wellenleiterrohr durch ein sich vorzugsweise durch die Elektrodenmasse erstreckendes Wellenleiterrohr gebildet ist.

Insbesondere in dem Fall, wenn die Messung an einer Söderberg-Elektrode erfolgen soll, ist es vorteilhaft, wenn das Wellenleiterrohr aus Wellenleitersegmenten zusammengesetzt ist, die mittels zumindest eines Segmentverbinders miteinander verbunden sind. Dabei können die einzelnen Wellenleitersegmente in ihrer Länge so bemessen sein, dass jeweils ein Wellenleitersegment einem Elektrodenteilstück einer Söderberg-Elektrode zugeordnet wird.

In dem Fall, dass sich das Wellenleiterrohr aus Wellenleitersegmenten zusammensetzt, ist es vorteilhaft, wenn der Segmentverbinder einen Querschnittsadapter aufweist zur Ausbildung eines kontinuierlichen Innendurchmessers in einem Übergangsbereich zwischen zwei Wellenleitersegmenten, um somit keine Unstetigkeiten in der die Fortpflanzung der Radarwellen beeinflussenden Geometrie des Wellenleiterrohres entstehen zu lassen.

Nachfolgend wird eine bevorzugte Variante des Verfahrens unter Erläuterung einer bevorzugten Ausführungsform einer dabei zum Einsatz kommenden Vorrichtung unter Bezugnahme auf die Zeichnung näher erläutert. Es zeigen:
- **Fig. 1**: einen mit einer Söderbergelektrode bestückten Elektroofen in schematischer Darstellung;
- **Fig. 2**: eine vergrößerte Darstellung der Söderbergelektrode mit daran angeschlossener Längenmessvorrichtung;
- **Fig. 3**: eine vergrößerte Teilansicht der in Figur 2 dargestellten Söderbergelektrode mit einer Wellenleiteranschlusseinrichtung am Endquerschnitt der Elektrode und zwischen Wellenleitersegmenten angeordneten Segmentverhindern;
- **Fig. 4**: eine vergrößerte Darstellung eines Teilstücks der Wellenleiteranschlusseinrichtung;
- **Fig. 5**: einen Segmentverbinder in vergrößerter Darstellung.

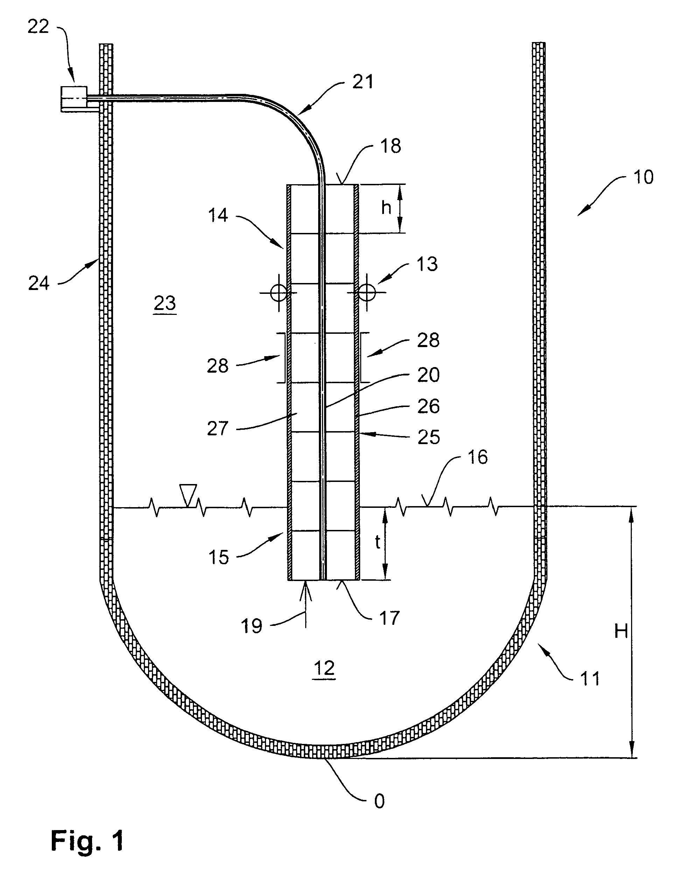

Fig. 1 zeigt einen Elektroofen 10 mit einem Ofengefäß 11, in dem ein Schmelzbad 12 aus geschmolzenem Metall aufgenommen ist. Oberhalb des Schmelzbades 12 befindet sich aufgenommen in einer Elektrodenzuführeinrichtung 13 eine, hier als Söderberg-Elektrode ausgebildete Elektrode 14, deren unteres Verbrauchsende 15 in das Schmelzbad 12 eingetaucht ist, derart, dass zwischen einer Badoberfläche 16 und einem den unteren Stirnquerschnitt der Elektrode bildenden Verbrauchsquerschnitt 17 eine Schmelzenabstand t von der Schmelzenoberfläche (Badoberfläche 16) ausgebildet ist, die sich in einer Höhe H oberhalb eines Ofenbezugspunktes O befindet. Im Fall des hier dargestellten Ausführungsbeispiels weist die Elektrode 14 oberhalb der Elektrodenzuführeinrichtung 13 einen Endquerschnitt 18 auf.

Zwischen dem Endquerschnitt 18 und dem Verbrauchsquerschnitt 17 erstreckt sich in Richtung (Abnutzungsrichtung 19) der als Folge des Elektrodenabbrands fortlaufenden Abnutzung der Elektrode 14 ein Wellenleiterrohr 20. An das Wellenleiterrohr 20 ist vermittels einer Wellenleiteranschlusseinrichtung 21 eine Radar-Sende-/Empfangseinrichtung 22 angeschlossen, die im vorliegenden Fall außerhalb einer Ofenkammer 23 des Elektroofens 10 an einer Außenwandung 24 des Elektroofens 10 stationär befestigt ist.

Die im vorliegenden Fall als Söderbergelektrode ausgebildete Elektrode 14 ist aus einer Mehrzahl von Elektrodenteilstücken 25 zusammengesetzt, die jeweils einen die äußere Form bestimmenden Stahlring 26 mit einer darin aufgenommen Kohlenstoffpaste 27 aufweisen. Die Elektrode 14 wird in situ aus den Teilstücken 25 während des Betriebs des Elektroofens 10 zusammengesetzt, derart, dass in dem Maße, wie ein Abbrand von Teilstücken 25 am Verbrauchsende 15 der Elektrode 14 erfolgt, neue Teilstücke 25 auf den jeweiligen Endquerschnitt 18 des obersten Teilstücks 25 aufgesetzt werden. Da entsprechend dem Elektrodenabbrand am Verbrauchsende 15 der Elektrode 14 eine Nachförderung der Elektrode 14 entgegen der Abnutzungsrichtung 19 erfolgt, verändert sich die Lage des Endquerschnitts 18 im Wesentlichen in einem der Höhe h eines Teilstücks 25 entsprechenden Bereich, so dass sich der Endquerschnitt 18 also in etwa um das Maß h nach unten und oben bewegt.

Im Verlauf der Nachförderung der Elektrode 14 gelangen jeweils neu auf den Endquerschnitt 18 aufgesetzte Teilstücke 25 in den Bereich von Polschuhen 28, über die elektrischer Strom in die Elektrode 14 eingeleitet wird, der ein Verbacken der Kohlenstoffpaste 27 bewirkt und zur Erzeugung eines hier nicht dargestellten Lichtbogens am Verbrauchsquerschnitt 17 der Elektrode 14 dient, der zur Abnutzung der Elektrode 14 führt.

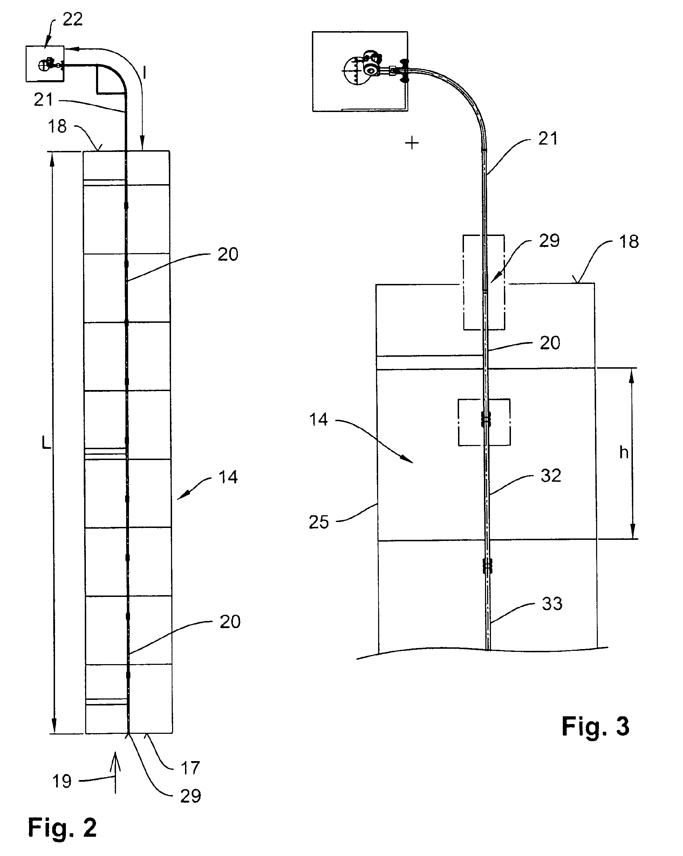

In den **Fig. 2 und 3** ist die Elektrode 14 mit der daran angeschlossenen Radar-Sende-/Empfangseinrichtung 22 dargestellt. Wie aus **Fig. 2** deutlich wird, entspricht ein vermittels der Radarmessung ermittelter Messwert der stationär, also unabhängig von der Elektrode 14 angeordneten Radar-Sende-/Empfangseinrichtung 22 der Relativlage des Verbrauchsquerschnitts 17 zur Radar-Sende-/Empfangseinrichtung 22, unter der Voraussetzung, dass sich ein Wellenleiterende 29 des Wellenleiterrohrs 20 in der Ebene des Verbrauchsquerschnitts 17 befindet. Bei bekannter Länge 1 der Wellenleiteranschlußeinrichtung 21 lässt sich somit unmittelbar die Länge L der Elektrode bzw. die Position des Verbrauchsquerschnitts 17 bestimmen. Bei bekannter Position des Verbrauchsquerschnitts 17 läßt sich unter Berücksichtigung der bekannten Position der Schmelzenoberfläche (Badoberfläche 16) auf einfachste Art und Weise der Schmelzenabstand t bestimmen (siehe auch **Fig. 1**).

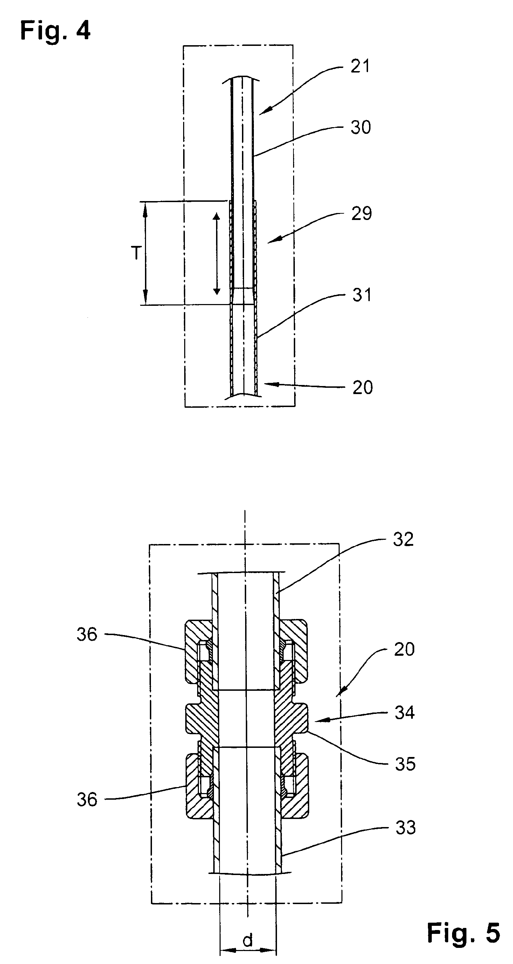

**Fig. 4** zeigt den Übergang zwischen der in **Fig. 3** dargestellten Wellenleiteranschlusseinrichtung 21 zum Wellenleiterrohr 20 im Bereich des Endquerschnitts 18 in vergrößerter Darstellung. Wie **Fig. 4** zeigt, ist eine Wellenleiterverbindung 29 zwischen der Wellenleiteranschlusseinrichtung 21 und dem Wellenleiterrohr 20 derart ausgebildet, dass ein freies Ende 30 der Wellenleiteranschlusseinrichtung 21 in ein benachbartes freies Ende 31 des Wellenleiterrohrs teleskopartig eingesetzt ist und dabei die Wellenleiterverbindung 29 als Schiebemuffe ausbildet.

Aufgrund der mit der Schiebemuffe 29 ermöglichten Teleskoplänge T 1 der Wellenleiteranschlusseinrichtung 21 kann der Abstand der Radar-Sende-/Empfangseinrichtung 22 gegenüber dem Endquerschnitt 18 um die Teleskoplänge T verändert werden. Wenn die Teleskoplänge T in etwa der Höhe h eines Teilstücks 25 der Elektrode 14 entspricht, kann also trotz stationärer Anordnung der Radar-Sende-/Empfangseinrichtung 22 ein Wellenleiterkontakt zwischen der Radar-Sende-/Empfangseinrichtung 22 und dem Ende 31 des Wellenleiterrohrs 20 im Endquerschnitt 18 der Elektrode 14 aufrechterhalten werden.

**Fig. 5** zeigt einen, wie in **Fig. 3** dargestellt, jeweils zwischen zwei Wellenleitersegmenten 32, 33 des Wellenleiterrohrs 20 zur kontinuierlichen Verbindung der Wellenleitersegmente 32, 33 angeordneten Segmentverbinder 34. Wie **Fig. 5** im einzelnen zeigt, umfasst der Segmentverbinder 34 im Wesentlichen einen Querschnittsadapter 35, der einen mit den Wellenleitersegmenten 32, 33 übereinstimmenden Innendurchmesser d aufweist. Die Verbindung des Querschnittsadapters 35 mit den Wellenleitersegmenten 32, 33 erfolgt jeweils über eine Rohrverschraubung 36.

## Patentansprüche

1. Verfahren zur Messung der Länge einer Elektrode (14) bzw. Bestimmung der Position eines Verbrauchsquerschnitts der Elektrode in einem Elektroofen (10), bei dem die Messung mittels Radar erfolgt, derart, dass eine Radar-Sende-/Empfangseinrichtung (22) mittels einer Wellenleiteranschlusseinrichtung (21) an einen an der Elektrode angeordneten, sich in Abnutzungsrichtung (19) der Elektrode von einem Endquerschnitt (18) der Elektrode zu einem Verbrauchsquerschnitt (17) der Elektrode erstreckenden Wellenleiter (20), der als Wellenleiterrohr oder Wellenleiterkanal ausgebildet ist, angeschlossen ist, und die Zeitdifferenz gemessen wird zwischen Aussendung des Radarsignals und Empfang des von einer Diskontinuitätsstelle des Wellenleiters im Verbrauchsquerschnitt der Elektrode durch Reflektion erzeugten Echos.

2. Verfahren nach Anspruch 1,
**dadurch gekennzeichnet,**
**dass** zur Anpassung des räumlichen Abstandes zwischen der unabhängig von der Elektrode (14) positionierten Radar-Sende-/Empfangseinrichtung (22) und dem Endquerschnitt (17) der Elektrode die Länge der Wellenleiteranschlusseinrichtung (21) verändert wird.

3. Verfahren nach Anspruch 1 oder 2,
**dadurch gekennzeichnet,**
**dass** die wirksame Länge des Wellenleiters (20) entsprechend eines auf dem Endquerschnitt (18) erfolgenden Aufbaus der Elektrode (14) mit Elektrodenteilstücken (25) zum Ersatz von im Verbrauchsquerschnitt (17) verbrauchter Elektrodenmasse verändert wird.

4. Verfahren nach einem der vorangehenden Ansprüche,
**dadurch gekennzeichnet,**
**dass** während des Betriebs des Elektroofens eine zum Verbrauchsquerschnitt (17) gerichtete Durchströmung des Wellenleiters (20) mit einem Spülmedium erfolgt.

5. Vorrichtung zur Messung der Länge einer Elektrode (14) bzw. Bestimmung der Position der Elektrode in einem Elektroofen (10) mit einer Radar-Sende-/Empfangseinrichtung (22), einem an der Elektrode angeordneten Wellenleiterrohr (20) und einer Wellenleiteranschlusseinrichtung (21), wobei das Wellenleiterrohr sich von einem Endquerschnitt (18) der Elektrode in Abnutzungsrichtung (19) der Elektrode bis zu einem Verbrauchsquerschnitt (17) der Elektrode erstreckt und die Wellenleiteranschlusseinrichtung zum Anschluss der Radar-Sende-/Empfangseinrichtung an ein Ende des Wellenleiterrohrs am Endquerschnitt der Elektrode dient.

6. Vorrichtung nach Anspruch 5,
**dadurch gekennzeichnet,**
**dass** die Wellenleiteranschlusseinrichtung (21) zur Verbindung der unabhängig von der Elektrode (14) positionierten Radar-Sende-/Empfangseinrichtung (22) mit dem Endquerschnitt (18) der Elektrode eine veränderbare Länge aufweist.

7. Vorrichtung nach Anspruch 5 oder 6,
**dadurch gekennzeichnet,**
**dass** zwischen der Wellenleiteranschlusseinrichtung (21) und dem Wellenleiterrohr (20) eine Wellenleiterverbindung (29) ausgebildet ist, in der ein oberes axiales Ende des Wellenleiterrohrs axial verschiebbar gegenüber dem unteren axialen Ende der Wellenleiteranschlusseinrichtung aufgenommen ist.

8. Vorrichtung nach Anspruch 7,
**dadurch gekennzeichnet,**
**dass** die Wellenleiterverbindung (29) als Schiebemuffe ausgebildet ist, derart, dass ein Ende (30) der Wellenleiteranschlusseinrichtung (21) und ein Ende (31) des Wellenleiterrohrs (20) ineinandergreifend angeordnet sind.

9. Vorrichtung nach einem der Ansprüche 5 bis 8,
**dadurch gekennzeichnet,**
**dass** das Wellenleiterrohr aus Wellenleitersegmenten (32, 33) zusammengesetzt ist, die mittels zumindest eines Segmentverbinders (34) miteinander verbunden sind.

10. Vorrichtung nach Anspruch 9,
**dadurch gekennzeichnet,**
**dass** der Segmentverbinder (34) einen Querschnittsadapter (35) aufweist zur Ausbildung eines kontinuierlichen Innendurchmessers d in einem Übergangsbereich zwischen zwei Wellenleitersegmenten (32, 33).

## Claims

1. A method for measuring the length of an electrode (14) or determining the position of a consumable cross section of the electrode in an electric oven (10), in which the measurement takes place by means of radar in such a manner that a radar transmission/receiving device (22) is connected by means of a waveguide connecting device (21) to a waveguide (20) arranged on the electrode and extending in the usage direction (19) of the electrode from an end cross section (18) of the electrode to a consumable cross section (17) of the electrode, which waveguide is constructed as a waveguide tube or waveguide duct, and the time difference is measured between the emission of the radar signal and reception of the echo produced by means of reflection by a discontinuity point of the waveguide in the consumable cross section of the electrode.

2. The method according to Claim 1, **characterised in that** the length of the waveguide connecting device (21) is changed to adjust the spatial distance between the radar transmission/receiving device (22), which is positioned independently of the electrode (14), and the end cross section (17) of the electrode.

3. The method according to Claim 1 or 2, **characterised in that** the effective length of the waveguide (20) is changed in accordance with a structuring of the electrode (14) taking place on the end cross section (18) with electrode sections (25) for replacing electrode mass consumed in the consumable cross section (17).

4. The method according to one of the preceding claims, **characterised in that** during operation of the electric oven, the waveguide (20) is perfused with a rinsing agent in the direction of the consumable cross section (17).

5. A device for measuring the length of an electrode (14) or determining the position of the electrode in an electric oven (10) with a radar transmission/receiving device (22), a waveguide tube (20) arranged at the electrode and a waveguide connecting device (21), wherein the waveguide tube extends from an end cross section (18) of the electrode in the usage direction (19) of the electrode through to a consumable cross section (17) of the electrode and the waveguide connecting device is used for connecting the radar transmission/receiving device to one end of the waveguide tube at the end cross section of the electrode.

6. The device according to Claim 5, **characterised in that** the waveguide connecting device (21) has a changeable length for connecting the radar transmission/receiving device (22), which is positioned independently of the electrode (14), to the end cross section (18) of the electrode.

7. The device according to Claim 5 or 6, **characterised in that** a waveguide connection (29) is formed between the waveguide connecting device (21) and the waveguide tube (20), in which an upper axial end of the waveguide tube is accommodated in an axially displaceable manner with respect to the lower axial end of the waveguide connecting device.

8. The device according to Claim 7, **characterised in that** the waveguide connection (29) is formed as a sliding sleeve in such a manner that one end (30) of the waveguide connecting device (21) and one end (31) of the waveguide tube (20) are arranged such that they engage in one another.

9. The device according to one of Claims 5 to 8, **characterised in that** the waveguide tube is composed of waveguide segments (32, 33) which are connected to one another by means of at least one segment connector (34).

10. The device according to Claim 9, **characterised in that** the segment connector (34) has a cross-section adapter (35) for forming a continuous internal diameter d in a transition region between two waveguide segments (32, 33).

## Revendications

1. Procédé pour mesurer la longueur d'une électrode (14) ou déterminer la position d'une section de consommation de l'électrode dans un four électrique (10), dans lequel la mesure s'effectue par radar, de telle sorte qu'un dispositif d'émission/réception par radar (22) est raccordé au moyen d'un dispositif de raccordement de guide d'ondes (21) à un guide d'ondes (20) disposé sur l'électrode, s'étendant dans le sens d'usure (19) de l'électrode depuis une section d'extrémité (18) de l'électrode vers une section de consommation (17) de l'électrode, lequel guide d'ondes est conçu sous forme de tuyau guide d'ondes ou de canal guide d'ondes, et la différence de temps est mesurée entre l'envoi du signal radar et la réception de l'écho générée par réflexion par un point de discontinuité du guide d'ondes dans la section de consommation de l'électrode.

2. Procédé selon la revendication 1, **caractérisé en ce que** la longueur du dispositif de raccordement de guide d'ondes (21) est modifiée pour adapter la distance dans l'espace entre le dispositif d'émission/réception par radar (22), positionné indépendamment de l'électrode (14), et la section d'extrémité (17) de l'électrode.

3. Procédé selon la revendication 1 ou 2, **caractérisé en ce que** la longueur efficace du guide d'ondes (20) est modifiée en fonction d'une structure, s'effectuant sur la section d'extrémité (18), de l'électrode (14) avec des tronçons d'électrode (25) pour le remplacement de la masse d'électrode consommée dans la section de consommation (17).

4. Procédé selon l'une des revendications précédentes, **caractérisé en ce qu'**une traversée, dirigée vers la section de consommation (17), du guide d'ondes (20) avec un agent de lavage, s'effectue pendant le fonctionnement du four électrique.

5. Dispositif pour mesurer la longueur d'une électrode (14) ou déterminer la position de l'électrode dans un four électrique (10) avec un dispositif d'émission et de réception par radar (22), un tuyau guide d'ondes (20) disposé sur l'électrode et un dispositif de raccordement du guide d'ondes (21), le tuyau guide d'ondes s'étendant depuis une section d'extrémité (18) de l'électrode dans le sens d'usure (19) de l'électrode jusqu'à une section de consommation (17) de l'électrode et le dispositif de raccordement de guide d'ondes servant au raccordement du dispositif d'émission/réception par radar à une extrémité du tuyau guide d'ondes sur la section d'extrémité de l'électrode.

6. Dispositif selon la revendication 5, **caractérisé en ce que** le dispositif de raccordement de guide d'ondes (21) présente une longueur variable pour la liaison du dispositif d'émission/réception par radar (22), positionné indépendamment de l'électrode (14), avec la section d'extrémité (18) de l'électrode.

7. Dispositif selon la revendication 5 ou 6, **caractérisé en ce qu'**une liaison de guide d'ondes (29) est conçue entre le dispositif de raccordement de guide d'ondes (21) et le tuyau guide d'ondes (20), liaison dans laquelle une extrémité axiale supérieure du tuyau guide d'ondes est réceptionnée de façon à pouvoir coulisser axialement par rapport à l'extrémité axiale inférieure du dispositif de raccordement de guide d'ondes.

8. Dispositif selon la revendication 7, **caractérisé en ce que** la liaison de guide d'ondes (29) est conçue sous forme de manchon coulissant, de telle sorte qu'une extrémité (30) du dispositif de raccordement de guide d'ondes (21) et une extrémité (31) du tuyau guide d'ondes sont disposées en s'engageant l'une dans l'autre.

9. Dispositif selon l'une des revendications 5 à 18, **caractérisé en ce que** le tuyau guide d'ondes est composé de segments de guide d'ondes (32, 33), qui sont reliés les uns aux autres au moyen d'au moins un connecteur de segment (34).

10. Dispositif selon la revendication 9, **caractérisé en ce que** le connecteur de segment (34) présente un adaptateur de section (35) pour la formation d'un diamètre intérieur d continu dans une zone de transition entre deux segments de guide d'ondes (32, 33).
